(19) **Europäisches Patentamt**

**European Patent Office**

**Office européen des brevets**

(11) **EP 0 685 151 B1**

(12) **EUROPÄISCHE PATENTSCHRIFT**

(45) Veröffentlichungstag und Bekanntmachung des Hinweises auf die Patenterteilung:
**07.04.1999 Patentblatt 1999/14**

(51) Int. Cl.⁶: **A01F 12/40**

(21) Anmeldenummer: **95106970.7**

(22) Anmeldetag: **09.05.1995**

(54) **Verteilvorrichtung für Häcksler**

Spreading device for chopper

Dispositif à répartir pour hacheur

(84) Benannte Vertragsstaaten:
**BE DE DK FR GB**

(30) Priorität: **03.06.1994 DE 4419421**

(43) Veröffentlichungstag der Anmeldung:
**06.12.1995 Patentblatt 1995/49**

(73) Patentinhaber: **CLAAS KGaA**
**33428 Harsewinkel (DE)**

(72) Erfinder:
• **Baumgarten, Joachim, Dr.**
**D-48361 Beelen (DE)**

• **Eggenhaus, Georg**
**D-48346 Ostbevern (DE)**

(56) Entgegenhaltungen:
EP-A- 0 212 270    EP-A- 0 316 923
EP-A- 0 537 621    DE-A- 2 815 936
DE-U- 8 600 709

• PATENT ABSTRACTS OF JAPAN vol. 10 no. 222 (M-504) ,2.August 1986 & JP-A-61 060529 (ISEKI) 28.März 1986,

**Beschreibung**

Die Erfindung bezieht sich auf eine Verteilvorrichtung für Häcksler, insbesondere Anbaustrohhäcksler für Mähdrescher gemäß dem Oberbegriff des Anspruchs 1.

Wenn das Stroh auf dem Feld bleibt und untergepflügt wird, stärkt es als humusbildender Stoff die Ertragskraft des Bodens. Für eine schnelle und einwandfrei Verrottung muß das Stroh kurzgehäckselt und über die gesamte Schnittbreite des Mähdreschers gleichmäßig verteilt sein.

Ein Anbaustrohhäcksler weist ein Häckslergehäuse mit darin angeordneter Messertrommel und Gegenmessern zur Zerkleinerung des Strohs und eine sich daran im Auslaufbereich des Häckslers anschließende Verteilvorrichtung für das Häckselstroh auf. Die Verteilvorrichtung dient der gleichmäßigen Ablagedes Häckselstrohs über die gesamte Schnittbreite des Mähdreschers. Die Verteilvorrichtung besteht aus mehreren in einem neigungsverstellbaren Ablenkgehäuse angeordneten, motorisch verstellbaren Leitblechen zur Führung des Häckselgutes, siehe z.B. EP-A-0316923.

Bei Windeinfluß wird eine gleichmäßige Ausstreuung des Häckselstrohs über die gesamte Schnittbreite des Mähdreschers in unerwünschter Weise beeinträchtigt. Häckselstroh, das unter dem Einfluß von Seitenwind in dem noch nicht abgemähten (stehenden) Erntebestand getragen wird, wird bei der nächsten Schnittbreite erneut vom Mähdrescher aufgenommen und belastet dessen Reinigungsanlage so, daß nur noch eine geringe Fahrgeschwindigkeit möglich ist. Anhäufungen von Häckselstroh auf dem Feld, die bei Ausstreuung unter Windeinfluß entstehen, führen zu schlecht verrottbaren Häckselstroh-Polstern.

Um dem Problem der Ausstreuung von Häckselstroh unter Seiten-Windeinfluß zu begegnen, gibt es bekannterweise Verteilvorrichtungen, die vom Fahrer in der Fahrkabine so einstellbar sind, daß das Häckselstroh entweder symmetrisch zur Mähdrescher-Längsrichtung oder je nach Seitenwind mehr oder weniger zur rechten oder linken Seite ausgestreut wird. Um so korrigieren zu können, muß der Fahrer jedoch die Ausstreuung des Häckselstrohs und die Verteilung auf dem Feld beobachten, was seine Aufmerksamkeit zusätzlich beansprucht und viel Erfahrung voraussetzt. Nach einem Fahrtrichtungswechsel und bei unstetigen Windverhältnissen muß der Fahrer sich bezüglich der Einstellung der Verteilvorrichtung jeweils ganz neu orientieren.

Ausgehend von diesem Stand der Technik ist es die Aufgabe der Erfindung, eine Verteilvorrichtung für Anbaustrohhäcksler an Mähdreschern zu schaffen, die den Fahrer bei der Korrektur des Windeinflusses auf die Ausstreuung des Häckselstrohs entlastet und stets eine gleichmäßige Verteilung des Häckselstrohs über die Schnittbreite gewährleistet.

Diese Aufgabe wird erfindungsgemäß durch die kennzeichnenden Merkmale des Patentanspruches 1 gelöst. Vorteilhafte Ausgestaltungen sind in den Unteransprüchen angegeben.

Die erfindungsgemäße Verteilvorrichtung für Häcksler, insbesondere Anbaustrohhäcksler für Mähdrescher, weist eine am Häcksler oder Mähdrescher angeordnete Windmeßeinrichtung zur Ermittlung der Windrichtung und der Windstärke auf. Die motorisch verstellbaren Leitbleche zur Führung des Häckselstrohs werden zur Kompensation des Windeinflusses auf das austretende Häckselstroh in Abhängigkeit dieser Meßwerte in der Richtung automatisch verstellt, wobei eine zur Häcksler- oder Mähdrescherlängsrichtung asymmetrische Leitblecheinstellung erzielt und/oder die Gesamtsteuerbreite variiert wird. Die aktuellen Windrichtung -und Windstärkenmeßwerte sind einer elektronischen Auswerte- und Steuereinrichtung zugeführt, welche gemäß dieser Werte Stellmotoren zur Richtungsverstellung der Leitbleche ansteuert.

Der Fahrer muß sich nicht mehr um die Kompensation des Windeinflusses auf die Ausstreuung des Häckselstrohs kümmern und kann sich ganz auf die Führung des Mähdreschers konzentrieren.

Die Einstellung der Verteilvorrichtung wird bei einem Fahrtrichtungswechsel und/oder bei unstetigen Windverhältnissen automatisch jeweils so geändert, daß die Ausstreuung des Häckselstrohs gleichmäßig über die Schnittbreite des Mähdreschers erfolgt.

In dem unabhängigen Nebenanspruch 10 wird eine weitere vorteilhafte Ausführungsform angegeben, bei der statt der Windmeßeinrichtung am Häcksler oder Mähdrescher mindestens ein optischer oder akustischer Sensor zur beührungslosen Detektion der Flugbahn des austretenden Häckselstrohs angeordnet ist. Die Sensorsignale sind der Auswerte- und Steuereinrichtung zugeführt, welche entsprechend dieser Signale die Stellmotoren der Leitbleche ansteuert. Selbstverständlich ist auch eine Kombination von Windmeßeinrichtung und Häckselstroh-Flugbahn-Sensor denkbar.

Auf den Zeichnungen sind Ausführungsbeispiele dargestellt, die nachfolgend näher erläutert werden. Es zeigt:

Fig. 1      eine schematische Draufsicht auf einen Mähdrescher bei der Erntefahrt,

Fig. 2      eine Draufsicht auf das Häckslergehäuse mit zwei unabhängig voneinander über Stellmotoren zu verstellenden Gruppen von Leitblechen,

Fig. 3    eine Draufsicht auf das Häckslergehäuse mit zwei über einen Verstellhebel miteinander verbundenen Gruppen von Leitblechen, welche über einen gemeinsamen Stellmotor verstellbar sind,

Fig. 4    eine Seitenansicht des Häckslergehäuses mit zwei senkrecht zueinander schwenkbar aufgehängten Platten zur Windmessung,

Fig. 4A    eine Ansicht der durch Wind aus der vertikalen Ruhelage ausgelenkten Schwenkplatte,

Fig. 5    eine Draufsicht auf das Häckslergehäuse mit den beiden schwenkbar aufgehängten Platten zur Windmessung,

Fig. 6    eine Seitenansicht eines Mähdreschers mit einem Schalenkreuzaneometer für die Windmessung,

Fig. 7    eine rückwärtige Ansicht eines Mähdreschers mit links und rechts je einem Sensor zur berührungslosen Abtastung der Häckselstroh-Flugbahn,

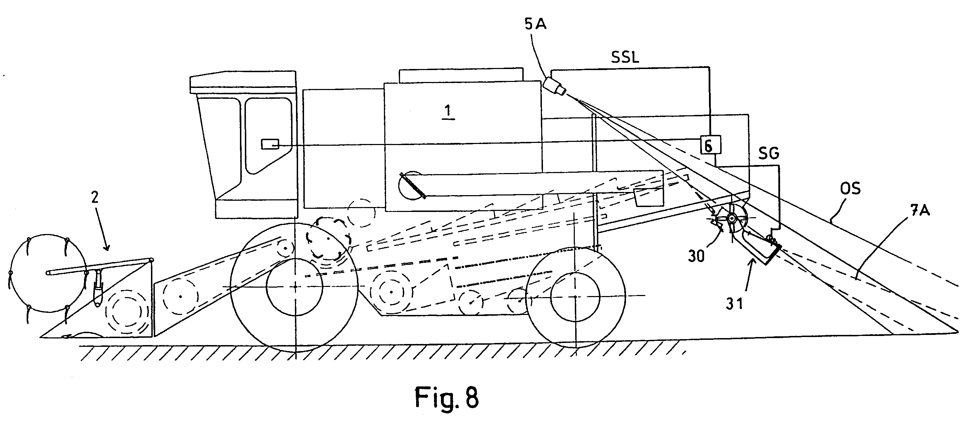

Fig. 8    eine Seitenansicht des Mähdreschers mit dem an dieser Seite angeordneten Sensor zur Abtastung der Häckselstroh-Flugbahn,

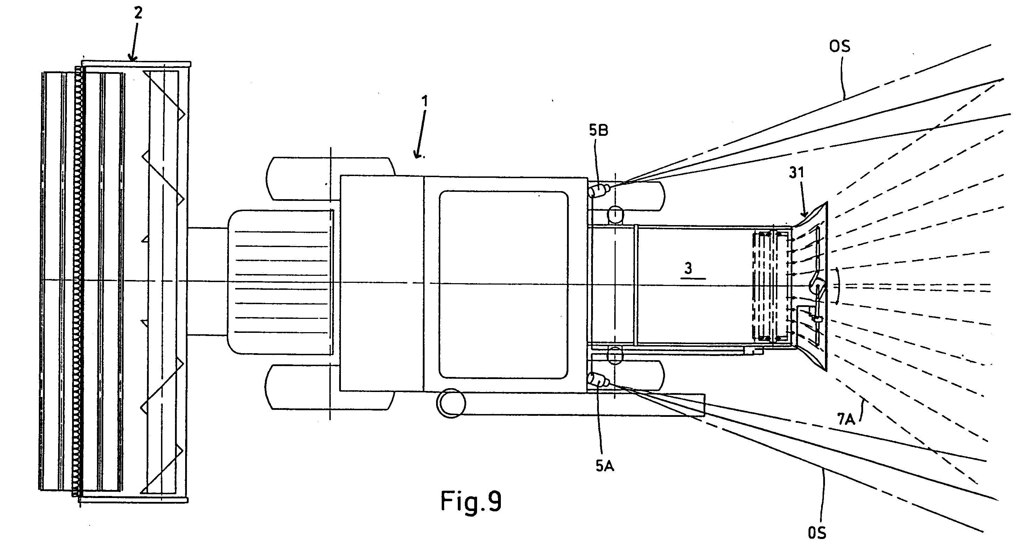

Fig. 9    eine Draufsicht auf den Mähdrescher mit den beiden Sensoren zur berührungslosen Abtastung der Häckselstroh-Flugbahn,

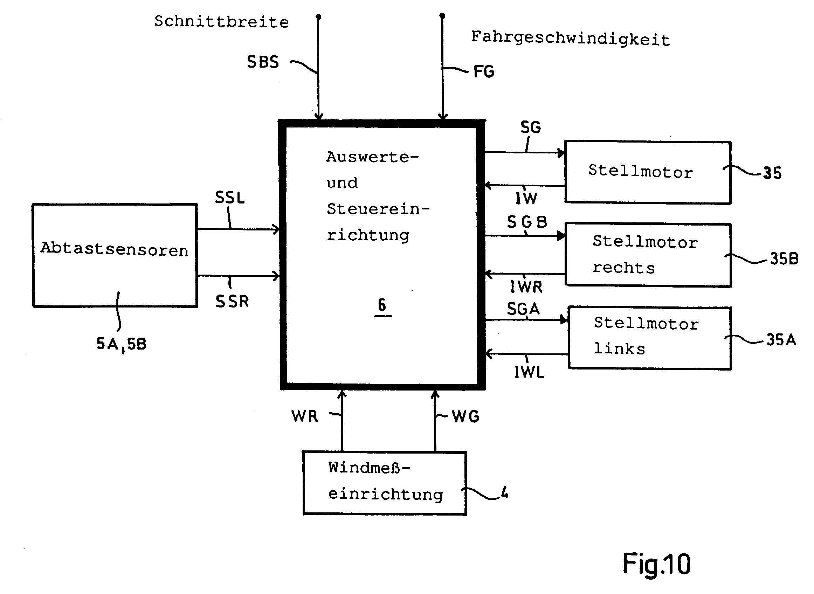

Fig. 10    die Auswerte- und Steuereinrichtung mit Eingangs- und Ausgangssignalen.

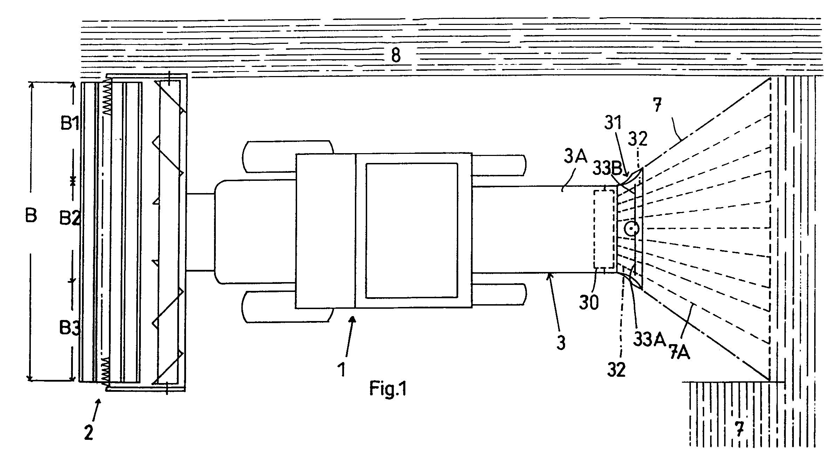

In Fig. 1 ist schematisch ein Mähdrescher (1) mit seinem frontseitigen Schneidwerk (2) und dem rückwärtigen Anbaustrohhäcksler (3) gezeigt. An den Ausgangsbereich des Anbaustrohhäckslers (3) schließt sich ein neigungsverstellbares Ablenkgehäuse (31) für das Häckselstroh (7) an. In dem Ablenkgehäuse (31) sind Leitbleche (32) zur Führung des Häckselstrohs (7) angeordnet, welche in Fig. 1 gestrichelt eingezeichnet sind und in deren Verlängerung einige Flugbahnen (7A) des Häckselstrohs (7) dargestellt sind. In Fahrtrichtung rechts neben dem Mähdrescher (1) ist der noch stehende Erntebestand (8) eingezeichnet, der bei der nächsten Schnittbreite abgemäht wird. Hinter dem Mähdrescher (1) und in Fahrtrichtung links neben diesem ist das auf dem Feld liegende, gleichmäßig verteilte Häckselstroh (7) angedeutet. Die Häckselstoh-Ausstreuung - wie in Fig. 1 dargestellt - ist symmetrisch zur Mähdrescher-Längsrichtung (1A) und gleichmäßig über die Gesamtschnittbreite (B) verteilt.

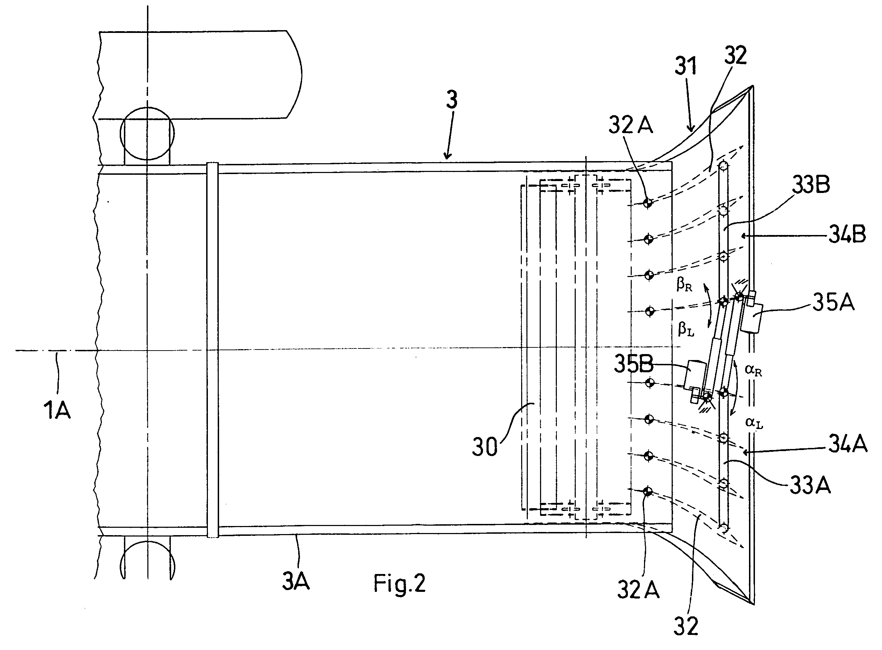

Der Anbaustrohhäcksler (3) weist zur Zerkleinerung des Strohs eine im Häckslergehäuse (3A) angeordnete Messertrommel (30) mit Gegenmessern auf, die in Fig. 2 schematisch angedeutet ist.

In dem neigungsverstellbaren Ablenkgehäuse (21) sind die jeweils um eine Achse (32A) schwenkbaren und motorisch verstellbaren Leitbleche (32) zur Führung des Häckselstrohs (7) angeordnet. Das kurzgehäckselte Stroh (7) wird durch die rotierende Messertrommel (30) in das Ablenkgehäuse (31) der Verteilvorrichtung geschleudert. Zusätzlich kann der Anbaustrohhäcksler (3) ein Gebläse (nicht dargestellt) zum Herausblasen des Häckselstrohs (7) aufweisen.

Wie in Fig. 2 gezeigt, sind die Leitbleche (32) zu beiden Seiten (links, rechts) der Mähdrescher-Längsrichtung (1A) jeweils über eine Koppelstange (33A, 33B) verbunden und zu einer Leitblechgruppe (34A, 34B) zusammengefaßt. Jede Leitblechgruppe (34A, 34B) ist unabhängig von der anderen über einen eigenen Stellmotor (35A, 35B) in der Richtung zur Häcksler-/Mähdrescher-Längsrichtung (1A) verstellbar. Die Verstellrichtungen der Leitbleche (32) in der linken Hälfte des Ablenkgehäuses (31) sind mit $\alpha_L$ und $\alpha_R$ bezeichnet, die Verstellrichtungen der Leitbleche (31) in der rechten Hälfte mit $\beta_L$ und $\beta_R$.

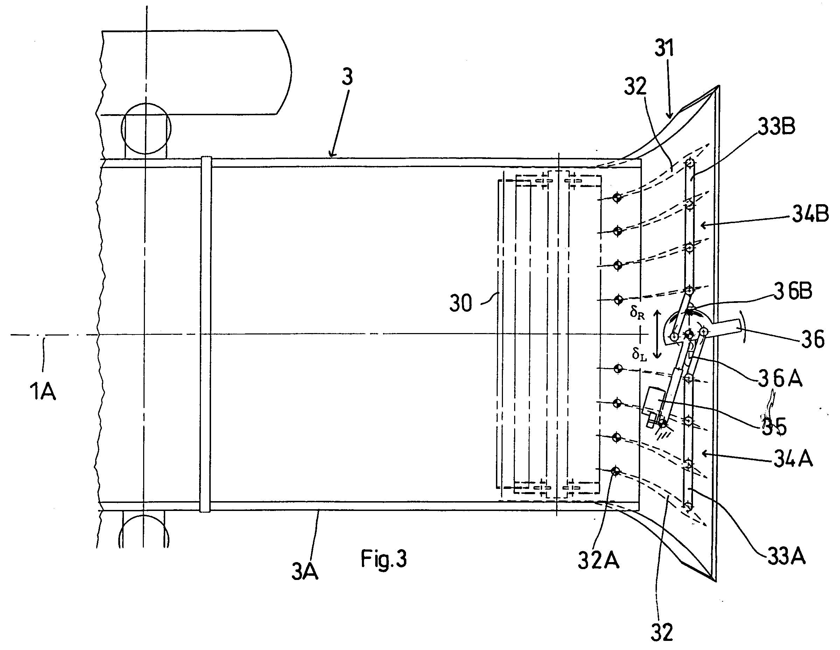

In Fig. 3 ist eine Verteilvorrichtung gezeigt, bei der die beiden Leitblechgruppen (34A, 34B) über eienn manuell betätigbaren Verstellhebel (36) zur Einstellung der Streubreite miteinander gekoppelt sind. Die beiden Leitblechgruppen (34A, 34B) sind über einen gemeinsamen, am Verstellhebel (36) angreifenden Stellmotor (35) gleichsinnig verstellbar. Dazu ist der Verstellhebel (36) in einer Führung (36A) verschiebbar gelagert. Über den Stellmotor (35) ist eine zur Häcksler-/Mähdrescher-Längsrichtung (1A) unsymmetrische Häckselstroh-Führung durch die Leitbleche (32) mit jeweils einer festeingestellten Streubreite erzielbar. Die Verstellrichtungen für die Leitbleche (32) sind mit $\delta_L$ und $\delta_R$ bezeichnet. Zur Einstellung der gewünschten Streubreite wird der Verstellhebel (36) gedreht, wodurch die beiden Leitblechgruppen (34A, 34B) gegensinnig, jedoch um den selben Betrag, verschwenkt werden. Anschließend wird der Verstellhebel (36) über eine Feststellschraube (36B) in der eingestellten Stellung arretiert. Die Einstellung des Verstellhebels (36) kann auch motorisch erfolgen.

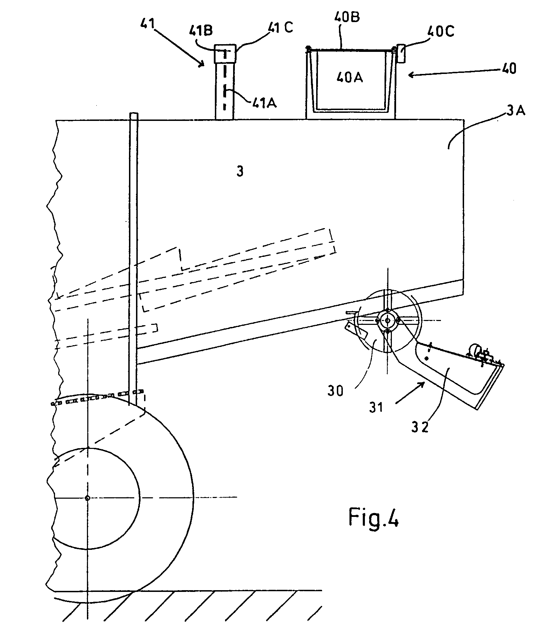

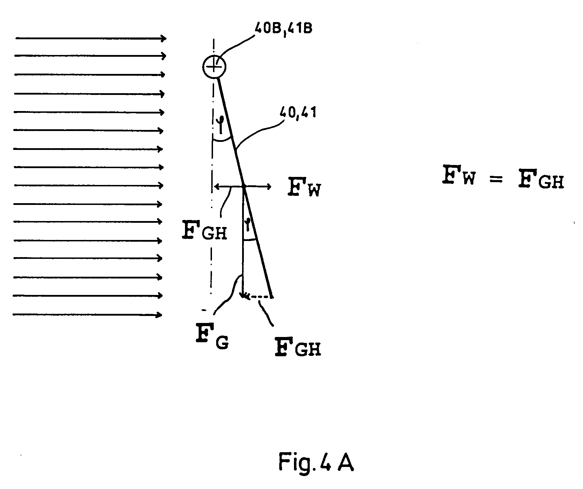

In Fig. 4 ist eine Windmeßeinrichtung (4) gezeigt, die auf dem Dach des Anbauhäcksler-Gehäuses (3A) montiert ist. Die Windmeßeinrichtung (4) besteht aus einem Seitenwindsensor (40) und einem Gegen-/Rückenwindsensor (41). Der Seitenwindsensor (40) ist von einer Schwenkplatte (40A) gebildet, die an einer horizontalen, in Häcksler-/Mähdrescher-Längsrichtung (1A) verlaufenden Achse (40B) schwenkbar aufgehängt ist. Der Gegen-/Rückenwindsensor (41) ist ebenfalls von einer Schwenkplatte (41A) gebildet, die an einer horizontalen, quer zur Häcksler-/Mähdrescher-Längsrichtung (1A) verlaufenden Achse (41B) schwenkbar aufgehängt ist.

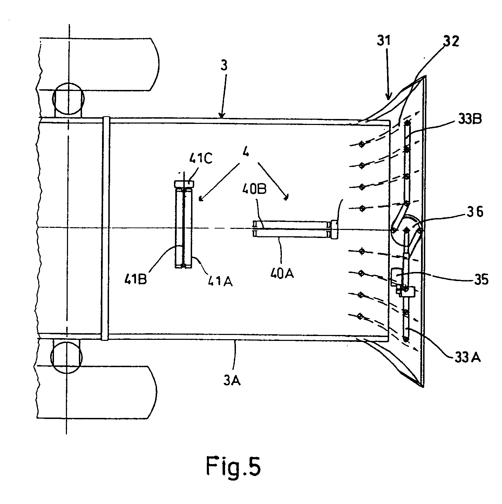

Die Auslenkungen der jeweiligen Schwenkplatte (40A, 41A) aus ihrer vertikalen Ruhelage aufgrund des Wind-Staudrucks wird elektrisch, z.B. über jeweils ein an der Schwenkachse (40B, 41B) angeordnetes Drehpotentiometer (40C, 41C) gemessen. Die Empfindlichkeit dieser Sensoren (40, 41) kann durch das Anbringen unterschiedlich großer Zusatzmassen und/oder durch die Installation von Reibmechanismen an der Aufhängung der Schwenkplatten (40A, 41A) variiert werden. Fig. 5 zeigt das Häckslergehäuse (3A) mit den beiden Schwenkplatten-Windsensoren (40, 41) in der Draufsicht.

In Fig. 4A ist eine Schwenkplatte (40, 41) gezeigt, die vom Wind um einen Winkel $\varphi$ aus der vertikalen Ruhelage ausgelenkt wird. Die auf die Schwenkplatte (40, 41) wirkenden Kräfte sind eingezeichnet. Die die Schwenkplatte (40, 41) aus der vertikalen Ruhelage auslenkende Windkraft ist mit $F_W$ bezeichnet; gleichzeitig wirkt auf die Schwenkplatte (40, 41) die Schwerkraft $F_G$, deren horizontale Komponente $F_{GH}$ der Windkraft $F_W$ entgegengerichtet ist. Im Gleichgewichtszustand sind beide Kräfte gleich groß.

Nachstehend sind die Bestimmungsgleichungen für die Kräfte angegeben. Dabei bedeutet:

m:          Masse der Schwenkplatte
g:          Erdbeschleunigung ($9,81$ m/s$^2$)
$\varphi$:          Auslenkwinkel
A:          Fläche der Schwenkplatte
$\rho$:          Dichte der Luft ($1,2$ mg/l)
C:          Luftgeschwindigkeit
$C_W$:          Luftwiderstandsbeiwert (hier bezogen auf eine quadratische Platte)

$$F_G = m * g$$

$$F_{GH} = m * g * \tan\varphi$$

$$F_W = 0,5 * A * \rho * \cos\varphi * C^2 * C_W$$

In der nachstehenden Tabelle sind für verschiedene Windgeschwindigkeiten und zwei Massen die zugehörigen Auslenkwinkel angegeben:

| Nr. | m kg | A m$^2$ | C m/s | $C_W$ | $\varphi°$ |
|---|---|---|---|---|---|
| 1 | 1 | 0,04 | 0 | 2,1 | 0,0 |
| 2 | 1 | 0,04 | 2 | 2,1 | 1,2 |
| 3 | 1 | 0,04 | 4 | 2,1 | 4,7 |
| 4 | 1 | 0,04 | 6 | 2,1 | 10,3 |
| 5 | 1 | 0,04 | 8 | 2,1 | 17,4 |
| 6 | 1 | 0,04 | 10 | 2,1 | 25,0 |
| 7 | 1 | 0,04 | 15 | 2,1 | 41,1 |
| 8 | 1 | 0,04 | 20 | 2,1 | 52,1 |
| 9 | 2 | 0,04 | 0 | 2,1 | 0,0 |
| 10 | 2 | 0,04 | 2 | 2,1 | 0,6 |

(fortgesetzt)

| Nr. | m kg | A m$^2$ | C m/s | C$_W$ | φ° |
|-----|------|---------|-------|-------|-----|
| 11 | 2 | 0,04 | 4 | 2,1 | 2,4 |
| 12 | 2 | 0,04 | 6 | 2,1 | 5,3 |
| 13 | 2 | 0,04 | 8 | 2,1 | 9,2 |
| 14 | 2 | 0,04 | 10 | 2,1 | 14,0 |
| 15 | 2 | 0,04 | 15 | 2,1 | 27,2 |
| 16 | 2 | 0,04 | 20 | 2,1 | 38,7 |

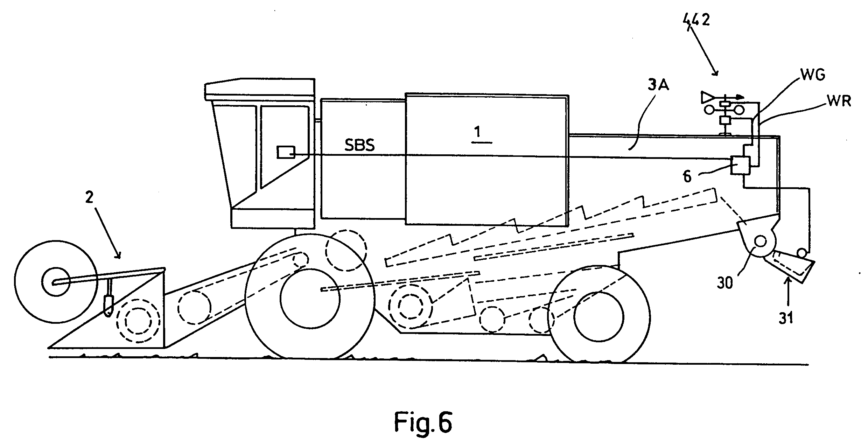

In einer alternativen Ausführungsform (vgl. Fig. 6) ist auf dem Dach des Mähdreschers (1) ein Schalenkreuzaneometer (42) oder ein Flügelradaneometer (nicht dargestellt) als Windmeßeinrichtung montiert.

In einer weiteren Ausführungsform sind zur Messung der Windrichtung und Windgeschwindigkeit an den Gehäuseblechen (3A) des Häckslers-/Mähdreschers (1) Drucksensoren (nicht dargestellt) zur Ermittlung von durch Wind-Staudruck hervorgerufenen elastischen Verformungen angeordnet.

Die jeweils aktuellen Windrichtungs- und Windgeschwindigkeitsmeßwerte (WR, WG) sind einer elektronischen Auswerte- und Steuereinrichtung (6) zugeführt, welche von einer analogen Schaltung oder einem Mikroprozessor gebildet ist. Als weitere Eingangssignale empfängt die Auswerte- und Steuereinrichtung (6) ein Fahrgeschwindigkeitssignal (FG), Istwerte (IW, IWL, IWR) der Stellmotoren (35, 35A, 35B) und ein Schnittbreitensignal (SBS). Wenn die Verteilvorrichtung einen Verstellhebel (36) für die Einstellung der Streubreite aufweist (vgl. Fig. 3), ist auch die Stellung dieses Verstellhebels (36) in die Auswerte- und Steuerelektronik(6) eingebbar.

In der Auswerte- und Steuereinrichtung (6) werden dann entsprechend der Eingangssignale (IW, IWL, IWR, WR, WG, SBS, FG) Sollwerte für die Stellmotoren (35, 35A, 35B) berechnet und mit den Istwerten (IW, IWL, IWR) verglichen. Aus den Differenzen zwischen den Istwerten (IW, IWL, IWR) und den Sollwerten werden dann Stellgrößen (SG, SGA, SGB) zur Ansteuerung der Stellmotoren (35, 35A, 35B) berechnet.

Bei einem Seitenwind von rechts bezogen auf die Fahrtrichtung (vgl. Fig. 2) werden die Leitblechgruppen (34A, 34B) in Richtung $\alpha_R$ und $\beta_R$ verschwenkt. Bei einem Seitenwind von links werden die Leitblechgruppen (34A, 34B) in Richtung $\alpha_L$ und $\beta_L$ verschwenkt. Bei einem Wind entgegen der Fahrtrichtung werden die Leitbleche (32) der linken Leitblechgruppe (34A) in Richtung $\alpha_L$ und die der rechten Leitblechgruppe (34B) in Richtung $\beta_R$ verschwenkt. Bei Rückenwind wird die linke Leitblechgruppe (34A) in Richtung $\alpha_R$ und die rechte Leitblechgruppe (34B) in Richtung $\beta_L$ verschwenkt.

Falls der Anbaustrohhäcksler (3) zum Herausblasen des Häckselstrohs (7) über ein Gebläse verfügt, kann auch der Gebläsemotor in Abhängigkeit der Windmeßwerte (WR, WG) von der Auswerte- und Steuereinrichtung (6) geregelt werden. Durch eine höhere Ausblasgeschwindigkeit werden die Flugbahnen des austretenden Häckselstrohs unempfindlicher gegenüber störenden Windeinflüssen.

Wenn die momentane Schnittbreite (B1, B2 oder B3) nicht der Schneidwerksbreite (B) entspricht, was z.B. beim Abmähen von Erntegut auf einem Feldrandstreifen der Fall ist, kann vom Fahrer in die Auswerte- und Steuereinrichtung (6) eingegeben werden, welches der Schnittbreitensegmente (B1, B2, B3) aktiv ist. Die Auswerte- und Steuereinrichtung (6) verstellt die Leitblechgruppen (34A, 34B) dann so, daß das Häckselstroh (7) über das aktive Schnittbreitensegment (B1, B2 oder B3) gleichmäßig verteilt wird.

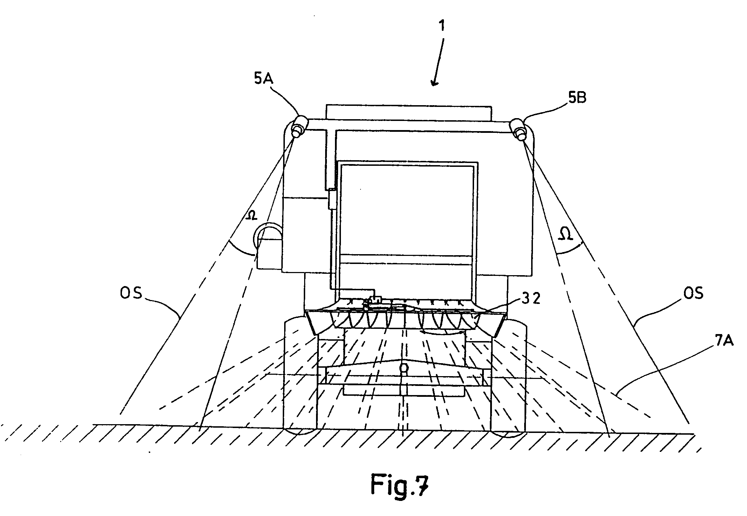

In Fig. 7 ist eine rückwärtige Ansicht eines Mähdreschers (1) gezeigt, an dem zu beiden seiten der Häcksler-/Mähdrescher-Längsrichtung (1A) je ein optischer oder akustischer Sensor (5A, 5B) zur Detektion von aus dem Ablenkgehäuse (31) austretenden Häckselstroh (7) angeordnet ist. Die Sensoren (5A, 5B) senden unter einstellbaren Winkeln zur Vertikalen und zur Mähdrescher-Längsrichtung (1A) in einem bestimmten Raumwinkel (Ω) Ortungsstrahlen (OS) in Richtung Erdboden aus. Die Ortungsstrahlen (OS) werden vom Häckselstroh (7) zum Sensor (5A, 5B) zurückreflektiert. Mit diesen Sensoren (5A, 5B) ist feststellbar, ob die Ausstreubreite des Häckselstrohs (7) links und/oder rechts zur Mähdrescher-Längsrichtung (1A) einen vorbestimmbaren Bereich überschreitet. Die Sensorsignale (SSL, SSR) sind der Auswerte- und Steuereinrichtung (6) zugeführt und werden von dieser zur Ansteuerung der Stellmotoren (35, 35A, 35B) ausgewertet. Z.B. wird bei einem Seitenwind von links das Häckselstroh (7) unerwünschter Weise zu weit nach rechts getragen, wobei dies von dem auf der rechten Seite angeordneten Sensor (5B) detektiert und an die Auswerte- und Steuereinrichtung (6) gemeldet wird. Daraufhin wird dann zur Kompensation des Seitenwindeinflußes die rechte Leitblechgruppe (34B) in Richtung $\beta_L$ verschwenkt.

Statt zweier Sensoren (5A, 5B) kann auch ein Sensor verwendet werden, der um die Häcksler-/Mähdrescher-Längsrichtung (1A) periodisch hin- und hergeschwenkt wird, wobei der Überwachungsschwenkbereich einstellbar ist.

Die Sensoren (5A, 5B) sind in einer ersten Ausführungsform von einem LASER-Sender/Empfangsgerät gebildet. In einer zweiten Ausführungsform sind die Sensoren (5A, 5B) jeweils von einem Ultraschall-Sender/Empfänger gebildet. In einer weiteren Ausführungsform sind die Sensoren (5A, 5B) jeweils von einem Radar-Sender/Empfänger gebildet.

## Patentansprüche

1. Verteilvorrichtung für Häcksler, insbesondere Anbauhäcksler für Mähdrescher, mit mehreren in einem Ablenkgehäuse angeordneten, motorisch verstellbaren Leitblechen zur Führung des Häckselgutes, dadurch gekennzeichnet, daß die Verteilvorrichtung (1) eine Windmeßeinrichtung (4) zur Ermittelung der Windrichtung (WR) und der Windgeschwindigkeit (WG) aufweist und die Leitbleche (32) zur Kompensation des Windeinflußes auf das austretende Häckselgut (7) in Abhängigkeit dieser Meßwerte (WR, WG) in der Richtung automatisch verstellbar sind, wobei eine zur Häcksler- oder Mähdrescherlängsrichtung (1A) asymmetrische Leitblecheinstellung erzielt und/oder die Gesamtstreubreite variiert wird.

2. Verteilvorrichtung für Häcksler nach Anspruch 1, dadurch gekennzeichnet, daß die Windmeßeinrichtung (4) einen Seitenwindsensor (40) aufweist, welcher von einer um eine horizontale, in Häcksler- oder Mähdrescherlängsrichtung (1A) verlaufende Achse (40B) schwenkbar aufgehängten Platte (40A) gebildet ist, wobei die Auslenkung der Platte (40A) aus ihrer vertikalen Ruhelage aufgrund des Wind-Staudrucks elektrisch gemessen wird.

3. Verteilvorrichtung für Häcksler nach Anspruch 1 oder 2, dadurch gekennzeichnet, daß die Windmeßeinrichtung (4) einen Gegen-/Rückenwindsensor (41) aufweist, welcher von einer um eine horizontale, quer zur Häcksler- oder Mähdrescherlängsrichtung (1A) verlaufende Achse (41B) schwenkbar aufgehängten Platte (41A) gebildet ist, wobei die Auslenkung der Platte (41A) aus ihrer vertikalen Ruhelage aufgrund des Wind-Staudrucks elektrisch gemessen wird.

4. Verteilvorrichtung für Häcksler nach Anspruch 1, dadurch gekennzeichnet, daß die Windmeßeinrichtung (4) von einem Schalenkreuzaneometer (42) gebildet ist.

5. Verteilvorrichtung für Häcksler nach Anspruch 1, dadurch gekennzeichnet, daß die Windmeßeinrichtung (4) von einem Flügelradaneometer gebildet ist.

6. Verteilvorrichtung für Häcksler nach Anspruch 1, dadurch gekennzeichnet, daß zur Messung der Windrichtung und der Windstärke an den Gehäuseblechen (3A) des Häckslers oder Mähdreschers (1) Drucksensoren zur Ermittlung von durch Wind-Staudruck hervorgerufenen elastischen Verformungen angeordnet sind.

7. Verteilvorrichtung für Häcksler nach einem der vorstehenden Ansprüche, dadurch gekennzeichnet, daß die Leitbleche (32) zu beiden Seiten der Häcksler-/Mähdrescherlängsrichtung (1A) jeweils über eine Koppelstange (33A, 33B) verbunden und zu einer Leitblechgruppe (34A, 34B) zusammengefaßt sind, wobei jede Leitblechgruppe (34A, 34B) unabhängig von der anderen über einen Stellmotor (35A, 35B) in der Richtung zur Häcksler-/Mähdrescherlängsrichtung (1A) verstellbar ist.

8. Verteilvorrichtung für Häcksler nach einem der vorstehenden Ansprüche, dadurch gekennzeichnet, daß die beiden Leitblechgruppen (34A, 34B) über einen Verstellhebel (36) zur Einstellung der Streubreite miteinander gekoppelt sind, wobei beide Leitblechgruppen (34 A, 34B) über einen gemeinsamen, am Verstellhebel (36) angreifenden Stellmotor (35) gleichsinnig verstellbar sind.

9. Verteilvorrichtung für Häcksler nach einem der vorstehenden Ansprüche, dadurch gekennzeichnet, daß dieselbe eine elektronische Auswerte- und Steuereinrichtung (6) aufweist, welche als Eingangssignale die aktuellen Windrichtungs- und Windgeschwindigkeitsmeßwerte (WR, WG), ein Fahrgeschwindigkeitssignal (FG) die Ist-Werte (IW, IWL, IWR) der Stellmotoren (35, 35A, 35B), ein Schnittbreiten-Signal (SBS) und ggf. die Stellung des Verstellhebels für die Streubreite empfängt, wobei die Auswerte- und Steuereinrichtung (6) die Stellmotoren (35, 35A, 35B) in Abhängigkeit der Eingangssignale (WR, WG, FG, SBS, IW, IWL, IWR) zur Richtungsverstellung der Leitbleche (32) ansteuert.

10. Verteilvorrichtung für Häcksler nach dem Oberbegriff des Patentanspruches 1, dadurch gekennzeichnetm daß die Verteilvorrichtung mindestens einen optischen oder akustischen Sensor (5A, 5B) zur berührungslosen Detektion der Flugbahn (7A) des austretenden Häckselgutes (7) aufweist, deren Steuersignale (SSL, SSR) der Auswerte- und Steuereinrichtung (6) zugeführt sind und von dieser zur Ansteuerung der Stellmotoren (35, 35A, 35B) ausgewertet werden.

**11.** Verteilvorrichtung für Häcksler nach Anspruch 10, dadurch gekennzeichnet, daß am rückwärtigen Teil des Häckslergehäuses (3A) zu beiden Seiten der Häcksler-/Mähdrescherlängsrichtung (1A) je ein optischer oder akustischer Sensor (5A, 5B) angeordnet ist, welcher zur Detektion von austretendem Häckselgut (7) unter einstellbaren Winkeln zur Mähdrescher-Längsrichtung (1A) Vertikalen und in einem bestimmten Raumwinkel ($\Omega$) Ortungsstrahlen (OS) in Richtung Erdboden aussendet, wobei Ortungsstrahlen (OS) vom Häckselgut (7) zum Sensor (5A, 5B) zurückreflektiet werden.

**12.** Verteilvorrichtung für Häcksler nach einem der vorstehenden Ansprüche, dadurch gekennzeichnet, daß die Sensoren (5A, 5B) jeweils von einem LASER-Sender/Empfängsgerät gebildet sind.

**13.** Verteilvorrichtung für Häcksler nach einem der vorstehenden Ansprüche, dadurch gekennzeichnet, daß die Sensoren (5A, 5B) jeweils von einem Ultraschall-Sender/Empfänger gebildet sind.

**14.** Verteilvorrichtung für Häcksler nach einem der vorstehenden Ansprüche, dadurch gekennzeichnet, daß die Sensoren (5A, 5B) jeweils von einem Radar-Sender/Empfänger gebildet sind.

## Claims

**1.** A distribution apparatus for chaff cutters, in particular mounted chaff cutters for combine harvesters, having a plurality of motor-adjustable guide plates arranged in a deflection housing, for guiding the cut chaff material, characterised in that the distribution apparatus (1) has a wind measuring device (4) for ascertaining the wind direction (WR) and the wind speed (WG) and the guide plates (32) are automatically adjustable in direction to compensate for the influence of the wind on the issuing cut chaff material (7) in dependence on those measurement values (WR, WG), wherein a guide plate setting which is asymmetrical relative to the longitudinal direction (1A) of the chaff cutter or combine harvester is achieved and/or the total spread width is varied.

**2.** A distribution apparatus for chaff cutters according to claim 1 characterised in that the wind measuring device (4) has a side wind sensor (40) which is formed by a plate (40A) which is suspended pivotably about a horizontal axis (40B) extending in the longitudinal direction (1A) of the chaff cutter or combine harvester, wherein deflection of the plate (40A) out of its vertical rest position as a result of the dynamic wind pressure is electrically measured.

**3.** A distribution apparatus for chaff cutters according to claim 1 or claim 2 characterised in that the wind measuring device (4) has a head/tail wind sensor (41) formed by a plate (41A) suspended pivotably about a horizontal axis (41B) extending transversely to the longitudinal direction (1A) of the chaff cutter or combine harvester, wherein deflection of the plate (41A) out of its vertical rest position as a result of the dynamic wind pressure is electrically measured.

**4.** A distribution apparatus for chaff cutters according to claim 1 characterised in that the wind measuring device (4) is formed by a cup cross-arm anemometer (42).

**5.** A distribution apparatus for chaff cutters according to claim 1 characterised in that the wind measuring device (4) is formed by an impeller wheel anemometer.

**6.** A distribution apparatus for chaff cutters according to claim 1 characterised in that for measuring the wind direction and the wind strength pressure sensors for ascertaining elastic deformation phenomena caused by dynamic wind pressure are arranged at the housing panels (3A) of the chaff cutter or combine harvester (1).

**7.** A distribution apparatus for chaff cutters according to one of the preceding claims characterised in that the guide plates (32) are connected at both sides of the longitudinal direction (1A) of the chaff cutter/combine harvester by way of a respective coupling bar (33A, 33B) and combined to form a guide plate group (34A, 34B), wherein each guide plate group (34A, 34B) is adjustable independently of the other by way of a control motor (35A, 35B) in the direction of the longitudinal direction (1A) of the chaff cutter/combine harvester.

**8.** A distribution apparatus for chaff cutters according to one of the preceding claims characterised in that the two guide plate groups (34A, 34B) are coupled together by way of an adjusting lever (36) for setting the spread width, wherein both guide plate groups (34A, 34B) are adjustable in the same direction by way of a common control motor

7

(35) which acts on the adjusting lever (36).

9.  A distribution apparatus for chaff cutters according to one of the preceding claims characterised in that the apparatus has an electronic evaluation and control device (6) which as input signals receives the current wind direction and wind speed measurement values (WR, WG), a travel speed signal (FG), the actual values (IW, IWL, IWR) of the control motors (35, 35A, 35B), a cutting width signal (SBS) and possibly the position of the adjusting lever for the spread width, wherein the evaluation and control device (6) actuates the control motors (35, 35A, 35B) in dependence on the input signals (WR, WG, FG, SBS, IW, IWL, IWR) for directional adjustment of the guide plates (32).

10. A distribution apparatus for chaff cutters according to the classifying portion of claim 1 characterised in that the distribution apparatus has at least one optical or acoustic sensor (5A, 5B) for contact-less detection of the trajectory (7A) of the issuing cut chaff material (7), the control signals (SSL, SSR) of which are fed to the evaluation and control device (6) and evaluated by same for actuation of the control motors (35, 35A, 35B).

11. A distribution apparatus for chaff cutters according to claim 10 characterised in that arranged at the rearward part of the chaff cutter housing (3A) at both sides of the longitudinal direction (1A) of the chaff cutter/combine harvester is a respective optical or acoustic sensor (5A, 5B) which for detection of issuing cut chaff material (7) emits locating beams (OS) in the direction of the ground at adjustable angles relative to the longitudinal direction (1A) of the combine harvester and the vertical and in a given spatial angle ($\Omega$), wherein locating beams (OS) are reflected back from the cut chaff material (7) to the sensor (5A, 5B).

12. A distribution apparatus for chaff cutters according to one of the preceding claims characterised in that the sensors (5A, 5B) are each formed by a respective laser transmitting/receiving device.

13. A distribution apparatus for chaff cutters according to one of the preceding claims characterised in that the sensors (5A, 5B) are each formed by a respective ultrasonic transmitter/receiver.

14. A distribution apparatus for chaff cutters according to one of the preceding claims characterised in that the sensors (5A, 5B) are each formed by a respective radar transmitter/receiver.

**Revendications**

1.  Dispositif éparpilleur pour hache-paille, en particulier hachepaille porté pour moissonneuse-batteuse, comportant plusieurs tôles déflectrices réglables par moteur, disposées dans un carter déflecteur, pour guider le produit haché, caractérisé par le fait que le hache-paille ou la moissonneuse (1), en tant que dispositif éparpilleur, comporte un dispositif de mesure de vent (4) pour déterminer la direction du vent (WR) et la vitesse du vent (WG) et que les tôles déflectrices (32) peuvent être réglées de manière automatique en orientation en fonction de ces valeurs de mesure (WR, WG) aux fins de compenser l'influence du vent sur le produit haché (7) sortant, un réglage asymétrique des tôles déflectrices par rapport à la direction longitudinale du hache-paille ou de la moissonneusebatteuse (1A) étant opéré et/ou la largeur totale d'éparpillement étant modifiée.

2.  Dispositif éparpilleur pour hache-paille selon la revendication 1, caractérisé par le fait que le dispositif de mesure de vent (4) comporte un détecteur de vent latéral (40) qui est formé d'une plaque (40A) montée pivotante autour d'un axe horizontal (40B) s'tendant dans la direction longitudinale du hache-paille ou de la moissonneuse-batteuse, la déviation de la plaque (40A) par rapport à sa position de repos verticale sous la pression du vent étant mesurée par voie électrique.

3.  Dispositif éparpilleur pour hache-paille selon la revendication 1 ou 2, caractérisé par le fait que le dispositif de mesure de vent (4) comporte un détecteur de vent contraire/arrière (41) qui est formé d'une plaque (41A) montée pivotante autour d'un axe horizontal (41B) qui s'étend dans la direction transversale à la direction longitudinale (1A) du hache-paille ou de la moissonneuse batteuse, la déviation de la plaque (41A) par rapport à sa position de repos verticale sous la pression du vent étant mesurée par voie électrique.

4.  Dispositif éparpilleur pour hache-paille selon la revendication 1, caractérisé par le fait que le dispositif de mesure de vent (4) est formé d'un anémomètre à coquilles en croix (42).

5.  Dispositif éparpilleur pour hache-paille selon la revendication 1, caractérisé par le fait que le dispositif de mesure de vent (4) est formé d'un anémomètre à turbine.

6. Dispositif éparpilleur pour hache-paille selon la revendication 1, caractérisé par le fait que pour mesurer la direction du vent et la force du vent, des capteurs de pression sont disposés sur les tôles de carter déflecteur (3A) du hache-paille ou de la moissonneuse-batteuse (1) aux fins de déterminer les déformations élastiques engendrées par la pression du vent.

7. Dispositif éparpilleur pour hache-paille selon la revendication 1, caractérisé par le fait que les tôles déflectrices (32), des deux côtés de l'axe longitudinal du hache-paille/de la moissonneuse-batteuse (1A), sont liées par une barre de couplage (33A, 33B) et sont regroupées chaque fois en un groupe de tôles déflectrices (34A, 34B), chaque groupe de tôles déflectrices (34A, 34B) pouvant être réglé indépendamment de l'autre groupe au moyen d'un moteur de réglage (35A, 35B) dans la direction de l'axe longitudinal du hache-paille/de la moissonneuse-batteuse.

8. Dispositif éparpilleur pour hache-paille selon une des revendications précédentes, caractérisé par le fait que les deux groupes de tôles déflectrices (34A, 34B) sont couplés l'un à l'autre par l'intermédiaire d'un levier de de réglage (36) aux fins de régler la largeur d'éparpillement, les deux groupes de tôles déflectrices (34A, 34B) pouvant être déplacés dans le même sens au moyen d'un moteur de réglage (35) commun qui agit sur le levier de réglage (36).

9. Dispositif éparpilleur pour hache-paille selon une des revendications précédentes, caractérisé par le fait qu'il comprend un dispositif de traitement et de commande (6) électronique qui reçoit comme signaux d'entrée les valeurs actuelles de direction et de vitesse du vent (WR, WG), un signal de vitesse du véhicule (FG), les valeurs réelles (IW, IWL, IWR) des moteurs de réglage (35, 35A, 35B), un signal de largeur de coupe (SBS) et le cas échéant la position du levier de réglage pour la largeur d'éparpillement, le dispositif de traitement et de commande (6) commandant les moteurs de réglage (35, 35A, 35B) en fonction des signaux d'entrée (WR, WG, FG, SBS, IW, IWL, IWR) aux fins de modifier l'orientation des tôles déflectrices (32).

10. Dispositif éparpilleur pour hache-paille selon la revendication 1, caractérisé par le fait que le dispositif éparpilleur comporte au moins un capteur optique ou acoustique (5A, 5B) pour la détection sans contact de la trajectoire (7A) du produit haché sortant (7), dont les signaux de commande (SSL, SSR) sont transmis au dispositif de traitement et de commande (6) et exploités par ce dernier aux fins de commander les moteurs de réglage (35, 35A, 35B).

11. Dispositif éparpilleur pour hache-paille selon la revendication 10, caractérisé par le fait que sur la partie arrière du carter de hachepaille (3A), de part et d'autre de l'axe longitudinal de hache-paille/moissonneuse batteuse (1A) est disposé chaque fois un capteur optique ou acoustique (5A, 5B) qui, pour détecter le produit haché sortant (7), émet des rayons de localisation (OS) en direction du sol sous des angles réglables par rapport à l'axe longitudinal de la moissonneuse-batteuse (1A) et à la verticale et à l'intérieur d'un angle solide ($\Omega$), les rayons de localisation (OS) étant réfléchis en direction du capteur (5A, 5B) par le produit haché (7).

12. Dispositif éparpilleur pour hache-paille selon une des revendications précédentes, caractérisé par le fait que les capteurs (5A, 5B) sont constitués chaque fois d'un appareil émetteur/récepteur à Laser.

13. Dispositif éparpilleur pour hache-paille selon une des revendications précédentes, caractérisé par le fait que les capteurs (5A, 5B) sont constitués chaque fois d'un appareil émetteur/récepteur à ultrasons.

14. Dispositif éparpilleur pour hache-paille selon une des revendications précédentes, caractérisé par le fait que les capteurs (5A, 5B) sont constitués chaque fois d'un appareil émetteur/récepteur radar.

Fig.1

B
B1
B2
B3

8
2
1
3
3A
33B
31
32
7
30
33A
7A
32
7

EP 0 685 151 B1

10

Fig.2

Fig.3

Fig.4

$$F_W = F_{GH}$$

Fig. 4 A

Fig.5

Fig.6

Fig.7

Fig. 8

Fig.9

Fig.10

EP 0 685 151 B1